# EUROPÄISCHE PATENTSCHRIFT

(11) **EP 0 972 149 B1**
(45) Veröffentlichungstag und Bekanntmachung des Hinweises auf die Patenterteilung: **04.12.2002**
(21) Anmeldenummer: 98910897.2
(22) Anmeldetag: 13.03.1998
(51) Int. Cl.: F16K 11/078

(54) **DURCH KUGELBAHN GESTEUERTES PLANSCHEIBEN-MISCHVENTIL**
SURFACE PLATE MIXING FAUCET GUIDED BY BALL TRANSFER TABLE
MITIGEUR A DISQUES PLANS COMMANDE PAR COURONNE A BILLES

(30) Priorität: 04.04.1997 HU 9700702
(43) Veröffentlichungstag der Anmeldung: 19.01.2000
(73) Patentinhaber: KEROX-MULTIPOLAR Ipari és Kereskedelmi Kft, 1117 Budapest (HU)
(72) Erfinder: GYOZO, Baki, H-1111 Budapest (HU)
(74) Vertreter: Schulte, Jörg, Dipl.-Ing.
(86) Internationale Anmeldenummer: HU9800024
(87) Internationale Veröffentlichungsnummer: WO98045630

(56) Entgegenhaltungen:
- EP-A- 0 238 674
- WO-A-90/05868
- DE-A- 3 041 696
- DE-A- 3 245 898
- US-A- 3 415 281

## Beschreibung

Die Erfindung betrifft eine Mischbatteriekartusche zur Mischung von Flüssigkeiten, insbesondere von Kalt- und Warmwasser, welche zwei übereinander angeordnete, miteinander eine Flachdichtung bildende und zur Regelung des Mischverhältnisses und der Druchflussmenge dienende Scheiben, eine Einlassscheibe und eine Regelscheibe aufweist, von denen, in Richtung der Flüssigkeitströmung gesehen, die erste Scheibe, die Einlassscheibe fix und die darüber angeordnete Regelscheibe zur Bewegung auf der Ebene in beliebige Richtung fähig ist, wobei ein, die Planbewegung der Regelscheibe gewährender Bewegungshebel mit einem, mit der Regelscheibe in Mitnehmerverbindung stehenden, Keramikbewegungselement in Mitnehmerverbindung steht und in einem Hebelhalter axial befestigt ist und der Hebelhalter durch mindestens eine Kugelfläche, vorteilhaft durch eine obere Fläche und/oder eine untere Fläche, mit einem solchen Drehmittelpunkt begrenzt ist, der auf der Achse des Bewegungshebels , vorzugsweise unter dem Kugelkopf des Bewegungshebels liegt.

Bekannt sind sogenannte Planscheibenmischventile und Mischventile mit Kugelsteuerelement. Mischventile mit Kugelsteuerelement enthalten Gleitdichtungen aus Gummi bzw. gummiähnlichem Material, die schnell zu Grunde gehen, obwohl ihr Raumbedarf gering ist. Ein solches Mischventil mit Kugelsteuerelement wird z.B. in der US-PS 4,838,304 dargestellt. Die Planscheibenmischventile sind von langer Lebensdauer, aber wegen ihrer Ausführungsgebundenheit durch einen großen Raumbedarf gekennzeichnet, vor allem dadurch bedingt, dass die Ausflussleitung der Mischbatterie um die Einflussleitung herum herumgeführt ist. Vorteilhaft beinhaltet das durch Kugelhahn gesteuerte Planscheibenmischventil keine elastisch bewegliche Dichtung, die Stelle seines Mischwasserausflusses weist in Richtung der Ausflussleitung, sodass zu seinem Einbau wenig Platz benötigt wird. Auch seine Lebensdauer stimmt mit denen normaler Planscheibenmischventile überein. Bei der aus der DE-A-30 41 696 bekannten Ausführung eines Planscheibenmischventils ist insbesondere aus dessen Figur 1 eine fixe Einlassscheibe, eine bewegliche Regelscheibe, ein Keramikbewegungselement, ein Bewegungshebel und ein Hebelhalter bekannt. Nachteilig ist die umständliche und schwierige Betätigung derartiger Mischbatteriekartuschen.

Der Erfindung liegt daher die Aufgabe zugrunde, zur Mischung, zum Auf- bzw. Zusperren des Kalt- und Warmwassers eine Konstruktion vorzusehen, welche die Vorteile der Planscheibenmischventile und der Mischventile mit Kugelsteuerelement in sich vereint.

Die Aufgabe wird gemäß der Erfindung dadurch gelöst dass der Drehmittelpunkt außerhalb des Bewegungshebels liegt und dass die Kugelfläche oder Kugelflächen des Hebelhalters zwischen der Kugelfläche eines Zwischenstücks und der Kugelfläche eines Deckels oder mindestens auf einer dieser Kugelflächen geführt ist.

Damit ist es möglich, die Bewegung der oberen Regelscheibe durch einen Hebel vorzunehmen, dessen jeder Punkt sich um einen - außerhalb des Hebels liegenden - Mittelpunkt auf eine Kugelfläche bewegt. Diese Bewegung des Hebels ist dadurch gewährt, dass eine gezielte Führung erfolgt. Der Hebel kann damit der im Deckel ausgestalteten Öffnung entsprechend auf der Kugelfläche bewegt werden, das untere Ende des Hebels, das im Keramikbewegungselement mitgenommen wird, verschiebt das Keramikbewegungselement in die der Hebelbewegung entsprechende Lage, sodass die mit ihm in Mitnehmerverbindung stehende Regelscheibe an die ihrer Führung entsprechende Ebene verschoben werden kann.

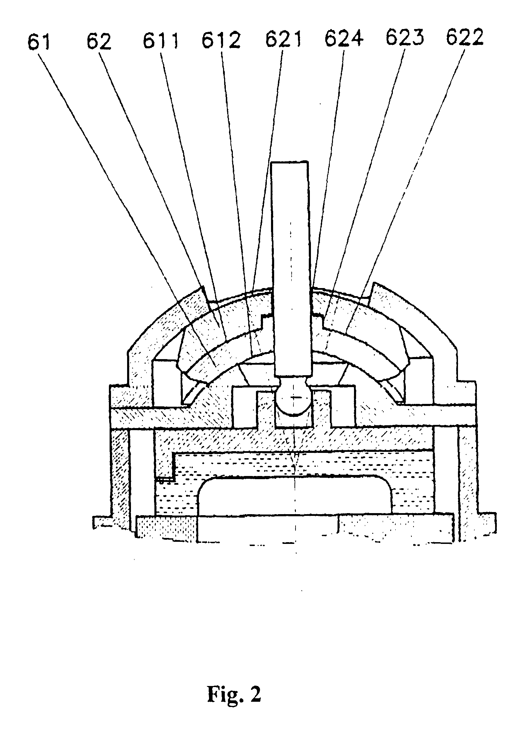

Der Hebel kann bei dieser Grundausführung frei verdreht werden. Mit dieser Ausführung kann eine Mischbatteriekartusche vorgegeben werden, wo der Hebel für die Regelung der Menge und des Mischverhältnisses als eine Art Steuerknüppel funktioniert. Um auf den Kartuschenhebel den Betätigungshebel einer gewöhnlichen Mischbatterie aufsetzen zu können, soll der Hebel um seine eigene Achse nicht verdreht werden können. Eine entsprechende Lösung ist auch in Figur 2 dargestellt, wo der bei der Grundausführung aus einem Stück bestehende Hebelhalter in zwei Teile getrennt wird, wo der sogenannte obere Hebelhalter, der zwei Kugelflächen hat, im Deckel geführt ist, um so nur in Richtung Auf- und Zusperren an einem Kreisbogen bewegt zu werden. Der darunter angebrachte untere Hebelhalter, der gleichfalls zwei Kugelflächen hat, bewegt sich in Richtung Auf- und Zusperren samt dem oberen Hebelhalter wobei er dazu in senkrechter Richtung im oberen Hebelhalter geführt bewegt werden kann, wodurch das Mischverhältnis des Kalt- und Warmwassers geregelt wird.

Die erfindungsgemässe Hahnbatteriekartusche ist in den Figuren der beiliegenden Zeichnungen eingehender dargestellt.

Von den Zeichnungen ist
die Figur 1. der Seitenansicht-Schnitt des Grundtypes der erfindungsgemässen Kartusche,
die Figur 2. der Seitenansicht-Schnitt des Oberteiles der Ausführungsvariante mit nicht verdrehbarem Hebel der erfindungsgemässen Kartusche,
die Figur 3. der Seitenansicht-Schnitt des Oberteiles der Ausführungsvariante mit nicht verdrehendem Keramik und mit nicht verdrehbarem Hebel der erfindungsgemässen Kartusche.

### Die Funktionsweise der erfindungsgemässen Kartusche wird wie folgt beschrieben:

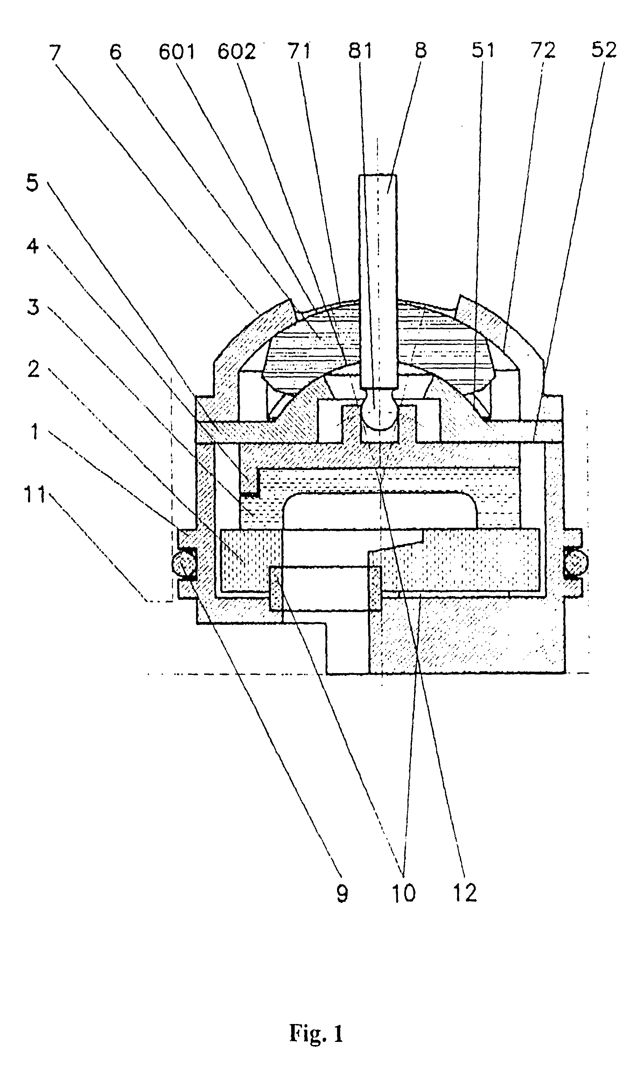

Der Seitenansicht-Schnitt der Grundausführung der erfindungsgemässen Batteriekartusche ist in der Figur 1 dargestellt. Im Gehäuse 1 unten ist die zum Kalt- und Warmwassereinlass und zum Mischwasserauslass dienende Einlasscheibe 2 angeordnet, wobei der Wasserraum von der Umgebung durch Gummidichtungen 10 getrennt ist. Im Batteriekörper 11 ist das Gehäuse 1 der Kartusche durch den Dichtungsring 9 vom Ausflusswasser her isoliert. Über der Einlasscheibe 2, daran auf einer ebenen Fläche beweglich, ist die Regelscheibe 3 angeordnet, durch deren Bewegung das Mischverhältnis des Kalt- und Warmwassers und die Auslassmenge zu regeln bzw. zuzusperren ist. Die beiden Scheiben bilden miteinander eine Flachdichtung, die aufeinander gleitenden Flächen sind poliert. Die Bewegung der Regelscheibe 3 ist durch den im Hebelhalter 6 befindlichen, gegen axiale Verschiebung gesicherten Bewegungshebel 8 gewährt, die obere Fläche 601 des Hebelhalters und die untere Fläche 602 des Hebelhalters sind Kugelflächen, deren Drehmittelpunkt 12 sich auf der Achse des Bewegungshebels 8, unter dem Bewegungshebel 8 befindet. Der Bewegungshebel 8 steht mit dem Keramikbewegungselement 4 durch den auf seinem unteren Ende ausgestalteten Kugelkopf 81 in Mitnehmerverbindung, das Keramikbewegungselement 4 steht mit der darunter liegenden Regelscheibe 3 in Mitnehmerverbindung. Das Keramikbewegungselement 4 kann mit dem Bewegungshebel 8 auf der ebenen Fläche 52 des Zwischenstückes 5 geführt bewegt werden. Der Hebelhalter 6 ist auf der oberen Fläche 601 des Hebelhalters und auf der unteren Fläche 602 des Hebelhalters geführt, und zwar von unten zwischen der Zwischenstück-Kugelfläche 51 des Zwischenstückes 5 und von oben zwischen der Deckel-Kugelfläche 72 des Deckels 7.

In dieser Ausführung kann der Bewegungshebel 8 als ein Steuerknüppel betätigt werden, die Funktionsgrenzen können durch die Form und Abmessungen der im Deckel 7 ausgestalteten Nut 71 eingestellt werden.

Die Figur 2. zeigt die Seitenansicht im Schnitt des Oberteiles der Ausführungsvariante mit nicht verdrehbarem Hebel der erfindungsgemässen Kartusche. Bei dieser Ausführung kann der Bewegungshebel 8 nicht verdreht worden, eine Kartusche solcher Ausgestaltung ist in den Einhebelmischbatterien mit dem herkömmlichen Betätigungshebel notwendig. Dabei besteht der Hebelhalter 6 nicht aus einem Stück, sondern aus zwei Stücken, aus einem unteren Hebelhalter 61 und einem oberen Hebelhalter 62. Der Bewegungshebel 8 steht mit dem unteren Hebelhalter 61 in Mitnehmerverbindung, er kann im Verhältnis dazu nicht verdreht und axial nicht verschoben werden. Die obere Fläche 611 von unterem Hebelhalter 61 gleitet auf der unteren Fläche 622 von oberem Hebelhalter 62 und die untere Fläche 612 von unterem Hebelhalter 61 auf der Kugelfläche 51 von Zwischenstück 5. Die obere Fläche 621 von oberem Hebelhalter 62 gleitet auf der Kugelfläche 72 von Deckel 7. Der Mittelpunkt jeder Kugelfläche ist der Drehmittelpunkt 12. Der obere Hebelhalter 62 ist im Deckel 7 seitwärts zwischen ebenen Flächen zugeführt, so ist er nur zur Kreisbewegung in Richtung Auf- und Zusperren fähig.

Der untere Hebelhalter 61 ist im oberen Hebelhalter 62 zur Richtung Auf- und Zusperren senkrecht in der Führungsnut 623 des oberen Hebelhalters geführt, so kann er samt dem darin mitgenommenen Bewegungshebel 8 auf der Kugelfläche in jeder Richtung bewegt werden, in Richtung Auf- und Zusperren bewegt er sich mit dem oberen Hebelhalter 62 zusammen und kann in dazu senkrechter Richtung in der Führungsnut 623 des oberen Hebelhalters geführt verschoben werden.

Die Bewegung des Hebels in dieser Richtung wird dadurch gewährt, dass im oberen Hebelhalter 62 eine der Hebelbreite entsprechende Nut 624 ausgestaltet ist. Die Funktionsgrenzen des in diesem Falle nicht verdrehbaren Bewegungshebels 8 können dem Obigen entsprechend durch die Bestimmung der Form und Abmessungen der Deckelnut 71 eingestellt werden.

Bei den bisherigen Ausführungen ist das ins Keramikbewegungselement 4 hineinreichende Ende des Bewegungshebels 8 ein Kugelkopf 81, der die freie Verdrehung des Keramikbewegungselementes 4 und der damit in Mitnehmerverbindung stehenden Regelscheibe 3 erlaubt. So kann er nur mit einer solchen Regelscheibe 3 entsprechend geregelt werden, deren Regelkante ein mit dem Mittelpunkt des Kugelkopfes 81 konzentrischer Kreis ist.

Es ist eine weitere Möglichkeit für die Formänderung der Überströmbohrungen der Einlasscheibe 2 und der Regelscheibe 3, wenn der in diesem Falle nicht verdrehbare Bewegungshebel 8 mit dem Keramikbewegungselement 4 in einer solchen Mitnehmerverbindung steht, dass er dieses auf der Ebene in jeden Punkt mitnimmt, aber die Verdrehung im Verhältnis zum Bewegungshebel 8 nicht erlaubt.

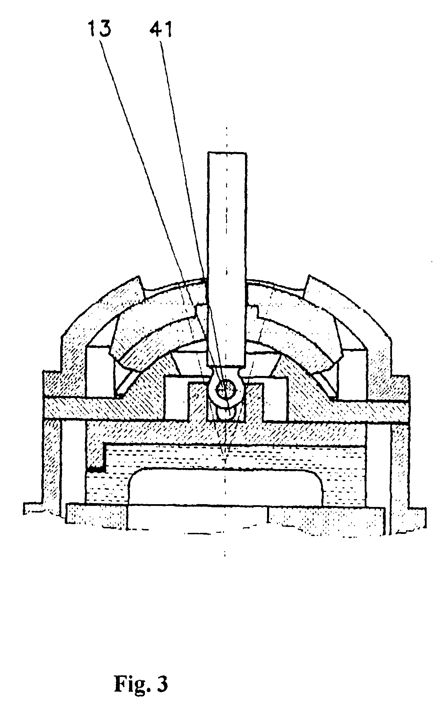

Diese Lösung ist in der Figur 3. dargestellt, wo in den Kugelkopf 81 durch den Mittelpunkt der Kugel ein Stift 13 hindurchgesteckt ist, der in der Stiftnut 41 des Keramikbewegungselementes 4 geführt ist und beide zusammen als ein Kardangelenk funktionieren, das heisst, der Stift 13 verhindert die Verdrehung des Bewegungshebels 8 und des Keramikbewegungselementes 4 im Verhältnis zueinander.

Ein Vorteil der erfindungsgemässen Lösung ist, dass sie die Vorzüge der Hahnbatterien mit Keramikflachdichtung und der mit Kugelfläche ausgestalteten Hahnbatterien in sich vereint, mit gleichzeitiger Beseitigung deren Nachteile.

### ELEMENTENVERZEICHNIS

| **Referenznummer** | **Benennung** |
|---|---|
| 1 | Gehäuse |
| 2 | Einlasscheibe |
| 3 | Regelscheibe |
| 4 | Keramikbewegungselement |
| 5 | Zwischenstückl |
| 6 | Hebelhalter |
| 7 | Deckel |
| 8 | Bewegungshebel |
| 9 | Dichtungsring |
| 10 | Gummidichtung |
| 11 | Batteriekörper |
| 12 | Drehmittelpunkt |
| 13 | Stift |
| | |
| 41 | Stiftnut |
| | |
| 71 | Deckelnut |
| 72 | Kugelfläche des Deckels |
| | |
| 51 | Kugelfläche des Zwischenstückes |
| 52 | ebene Fläche des Zwischenstückes |
| | |
| 601 | obere Fläche des Hebelhalters |
| 602 | untere Fläche des Hebelhalters |
| | |
| 61 | unterer Hebelhalter |
| 611 | obere Fläche des unteren Hebelhalters |
| 612 | untere Fläche des unteren Hebelhalters |
| | |
| 62 | oberer Hebelhalter |
| 621 | obere Fläche des oberen Hebelhalters |
| 622 | untere Fläche des oberen Hebelhalters |
| 623 | Führungsnut des oberen Hebelhalters |
| 624 | Nut des oberen Hebelhalters |
| | |
| 81 | Kugelkopf des Hebels |

## Patentansprüche

1. Mischbatteriekartusche zur Mischung von Flüssigkeiten, insbesondere von Kalt- und Warmwasser, welche zwei übereinander angeordnete, miteinander eine Flachdichtung bildende und zur Regelung des Mischverhältnisses und der Durchflussmenge dienende Scheiben, eine Einlassscheibe (2) und eine Regelscheibe (3) aufweist, von denen, in Richtung der Flüssigkeitströmung gesehen, die erste Scheibe, die Einlassscheibe (2) fix und die darüber angeordnete Regelscheibe (3) zur Bewegung auf der Ebene in beliebige Richtung fähig ist, wobei ein, die Planbewegung der Regelscheibe (3) gewährender Bewegungshebel (8) mit einem, mit der Regelscheibe in Mitnehmerverbindung stehenden, Keramikbewegungselement (4) in Mitnehmerverbindung steht und in einem Hebelhalter (6) axial befestigt ist und der Hebelhalter (6) durch mindestens eine Kugelfläche, vorteilhaft durch eine obere Fläche (601) und/oder eine untere Fläche (602), mit einem solchen Drehmittelpunkt (12) begrenzt ist, der auf der Achse des Bewegungshebels (8), vorzugsweise unter dem Kugelkopf (81) des Bewegungshebels (8) liegt,
**dadurch gekennzeichnet,**
**dass** der Drehmittelpunkt (12) außerhalb des Bewegungshebels (8) liegt und dass die Kugelfläche oder Kugelflächen des Hebelhalters (6) zwischen der Kugelfläche (51) eines Zwischenstücks (5) und der Kugelfläche (72) eines Deckels (7) oder mindestens auf einer dieser Kugelflächen geführt ist.

2. Mischbatteriekartusche nach Anspruch 1,
**dadurch gekennzeichnet,**
**dass** der Hebelhalter (6) aus zwei Teilen besteht, aus einem unteren Hebelhalter (61) und einem oberen Hebelhalter (62), wobei der untere Hebelhalter (61) durch zwei Kugelflächen, obere Fläche des unteren Hebelhalters (611) und untere Fläche des unteren Hebelhalters (612) begrenzt ist und wobei der obere Hebelhalter (62) gleichfalls durch zwei Kugelflächen, untere Fläche des oberen Hebelhalters (622) und obere Fläche des oberen Hebelhalters (621) begrenzt ist und wobei der Bewegungshebel (8) im unteren Hebelhalter (61) befestigt ist, der mit dem oberen Hebelhalter (62) durch die darin ausgestaltete Führungsnut des oberen Hebelhalters (623) in Mitnehmerverbindung steht und die Mittelpunkte der Kugelflächen im Drehmittelpunkt (12) liegen.

3. Mischbatteriekartusche nach Anspruch 2,
**dadurch gekennzeichnet,**
**dass** sich im Kugelkopf (81) des Bewegungshebels (8) im Mittelpunkt der Kugel ein Stift (13) befindet, der mit der Stiftnut (41) des Keramikbewegungselementes (4) in Mintnehmerverbindung steht.

## Claims

1. Mixing battery cartridge for mixing fluids, in particular cold and warm water, comprising two plates, an inlet plate (2) and a control plate (3), arranged one above the other and together forming a flat seal, to control the mixing ratio and the rate of flow, of which, viewed in the direction of the flow of liquid, the first plate, the inlet plate (2), is fixed and the control plate (3) arranged thereabove is capable of moving on the plane in any direction, a movement lever (8) ensuring plan movement of the control plate (3) being fastened in a drive-type manner to a ceramic movement element (4) fastened in a drive-type manner to the control plate and being axially fixed in a lever holder (6) and the lever holder (6) being limited by at least one ball face, advantageously by an upper face (601) and/or a lower face (602) with a centre of rotation (12) located on the axis of the movement lever (8), preferably below the ball head (81) of the movement lever (8), **characterised in that** the centre of rotation (12) is outside of the movement lever (8) and **in that** the ball face or ball faces of the lever holder (6) is/are guided between the ball face (51) of an intermediate piece (5) and the ball face (72) of a cover (7) or on at least one of these ball faces.

2. Mixing battery cartridge according to claim 1, **characterised in that** the lever holder (6) consists of two parts, of a lower lever holder (61) and an upper lever holder (62), the lower lever holder (61) being limited by two ball faces, the upper face of the lower lever holder (611) and the lower face of the lower lever holder (612), and the upper lever holder (62) also being limited by two ball faces, the lower face of the upper lever holder (622) and the upper face of the upper lever holder (621), and the movement lever (8) being fastened in the lower lever holder (61) which is fastened in a drive-type manner to the upper lever holder (62) by the guide groove of the upper lever holder (623) formed therein, and the centres of the ball faces are located in the centre of rotation (12).

3. Mixing battery cartridge according to claim 2, **characterised in that** a pin (13), which is fastened in a drive-type manner to the pin groove (41) of the ceramic movement element (4), is located in the ball head (81) of the movement lever (8) in the centre of the ball.

## Revendications

1. Cartouche de robinetterie mélangeuse pour mélanger des liquides, en particulier de l'eau froide et de l'eau chaude, qui présente deux disques agencés l'un au-dessus de l'autre, formant l'un avec l'autre un joint étanche plat et servant à régler le rapport de mélange et le débit, un disque d'admission (2) et un disque de réglage (3), parmi lesquels, en se plaçant dans le sens d'écoulement du liquide, le premier disque, le disque d'admission (2), est fixe et le disque de réglage (3), agencé au-dessus de celui-ci, est à même de se déplacer dans le plan dans une direction quelconque, où un levier de déplacement (8) garantissant le déplacement dans le plan du disque de réglage (3) est en liaison d'entraînement avec un élément de déplacement céramique (4) qui est en liaison d'entraînement avec le disque de réglage et est fixé axialement dans un porte-levier (6) et le porte-levier (6) est délimité par au moins une surface sphérique, avantageusement par une surface supérieure (601) et/ou une surface inférieure (602), avec un point central de rotation (12) qui se trouve sur l'axe du levier de déplacement (8), de préférence en dessous de la tête sphérique (81) du levier de déplacement (8), **caractérisée en ce que** le point central de rotation (12) se trouve à l'extérieur du levier de déplacement (8) et **en ce que** la ou les surfaces sphériques du porte-levier (6) est ou sont guidées entre la surface sphérique (51) d'une pièce intermédiaire (5) et la surface sphérique (72) d'un couvercle (7) ou au moins sur l'une de ces surfaces sphériques.

2. Cartouche de robinetterie mélangeuse selon la revendication 1, **caractérisée en ce que** le porte-levier (6) est constitué de deux pièces, un porte-levier inférieur (61) et un porte-levier supérieur (62), où le porte-levier inférieur (61) est délimité par deux surfaces sphériques, la surface supérieure du porte-levier inférieur (611) et la surface inférieure du porte-levier inférieur (612) et où le porte-levier supérieur (62) est délimité également par deux surfaces sphériques, une surface inférieure du porte-levier supérieur (622) et une surface supérieure du porte-levier supérieur (621) et le levier de déplacement (8) est fixé dans le porte-levier inférieur (61) qui est en liaison d'entraînement avec le porte-levier supérieur (62) via la rainure de guidage du porte-levier supérieur (623) qui y est ménagée et les points centraux des surfaces sphériques se situent au point central de rotation (12).

3. Cartouche de robinetterie mélangeuse selon la revendication 2, **caractérisée en ce que**, dans la tête sphérique (81) du levier de déplacement (8), au point central de la sphère, se trouve une tige (13), qui est en liaison d'entraînement avec la rainure (41) de l'élément de déplacement céramique (4).
